# EUROPEAN PATENT SPECIFICATION

(11) **EP 3 012 747 B1**
(45) Date of publication and mention of the grant of the patent: **18.10.2017**
(21) Application number: 14814274.8
(22) Date of filing: 21.04.2014
(51) Int. Cl.: G06F 17/30, H04L 12/743

(54) **TCAM-BASED TABLE QUERY PROCESSING METHOD AND APPARATUS**
TCAM-BASIERTES TABELLENABFRAGEVERFAHREN UND VORRICHTUNG
PROCÉDÉ ET APPAREIL DE TRAITEMENT D'INTERROGATION DE TABLE TCAM

(30) Priority: 19.06.2013 CN 201310244525
(43) Date of publication of application: 27.04.2016
(73) Proprietor: ZTE Corporation, Shenzhen, Guangdong 518057 (CN)
(72) Inventor: GU, Xia, Shenzhen Guangdong 518057 (CN); ZHANG, Qishen, Shenzhen Guangdong 518057 (CN)
(74) Representative: Carangelo, Pierluigi
(86) International application number: PCT/CN2014/075855
(87) International publication number: WO 2014/201902

(56) References cited:
- EP-A2- 1 690 382
- CN-A- 101 035 059
- CN-A- 101 834 802
- CN-A- 102 271 087
- US-A1- 2012 137 060
- HASHMI A ET AL: "Accelerating search and recognition with a TCAM functional unit", COMPUTER DESIGN, 2008. ICCD 2008. IEEE INTERNATIONAL CONFERENCE ON, IEEE, PISCATAWAY, NJ, USA, 12 October 2008 (2008-10-12), pages 81-86, XP031407546, ISBN: 978-1-4244-2657-7
- TAYLOR D E: "Survey and Taxonomy of Packet Classification Techniques", ACM COMPUTING SURVEYS, ACM, NEW YORK, NY, US, US, vol. 37, no. 3, 1 September 2005 (2005-09-01), pages 238-275, XP040032856, ISSN: 0360-0300, DOI: 10.1145/1108956.1108958

## Description

### TECHNICAL FIELD

The present disclosure relates to the field of communications, and in particular to a Ternary Content Addressable Memory (TCAM)-based table query processing method and apparatus.

### BACKGROUND

A table query manner based on a TCAM is convenient and fast and supports table query types of long key values and masks. When it is required to support numerous Access Control Lists (ACL) or numerous routes, an equipment vendor of a switch will generally select a TCAM to implement table query of the ACL or the routes.

At present, the table query framework of a TCAM chip is fixed, and a result returned by the TCAM-based table query can be only an item index number rather than the final result. If one entry needs to be queried by the TCAM, the query process needs to be designed as follows: an assembled key value is used to query the TCAM, an item index number is returned by the TCAM, and then a direct table is queried according to the item index number to obtain the final table query result. That is to say, if an entry is designed to be a TCAM-based table query type, both TCAM table and direct table must be queried.

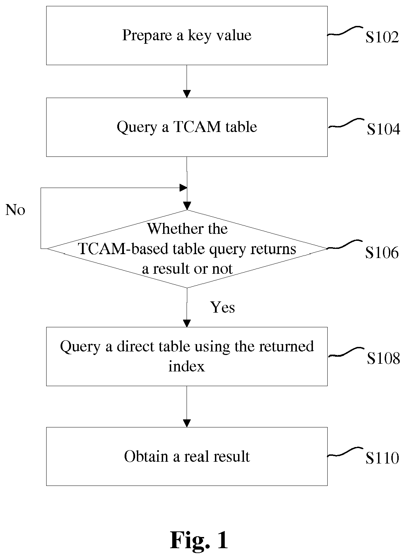

When a developer performs table query using the TCAM, a control word and a key value are firstly transmitted to the TCAM, then he waits for a result returned after the TCAM-based table query is finished, and finally, a direct table is queried using the index in the returned result to obtain a desired result. During the process of the TCAM-based table query, since a register into which a table query result is stored is unique in the chip, other entries can not be queried at the same time and the chip can only wait in an idle state. As shown in Fig. 1, the TCAM-based table query solution in related technologies includes the following steps:
step S102: a table query key value for executing TCAM-based table query is prepared, and step S 104 is executed after the preparation is completed;
step S104: the TCAM table is queried using the prepared table query key value, and then step S 106 is executed;
step S106: it is judged whether the TCAM-based table query has returned a result or not, if the result has been returned, step S108 is executed; otherwise, continue to perform step S106, i.e., a waiting process is performed if no result has been returned;
step S108: a direct table is queried using the index in the returned result; and
step S110: a desired table query result is obtained, and the process ends.

It can be seen from the table query steps above that the time cost by step S106 is the time for one TCAM-based table query, within this period of time, since a register into which the table query result is stored in a switch is fixed, other entries can not be queried at the same time and the switch can only wait in an idle state.

Therefore, the TCAM-based table query consumes a great deal of table query performance, and in the case where the service forwarding flow is complex, using the TCAM-based table query may cause that the service can not reach the forwarding requirement. With regard to the service using TCAM to store entries, although TCAM-based table query is simple and fast, the forwarding performance is a major defect.

Aiming at the problem above in the related technologies, no effective solution has been presented.

The related document (HASHMI A ET AL: "Accelerating search and recognition with a TCAM function unit") discloses a novel hardware acceleration scheme to improve the performance of SR applications. The related document (TAYOR D E: "Survey and Taxonomy of Packet Classification Techniques") discloses a survey and Taxonomy of Packet Classification Techniques.

### SUMMARY

For the technical problems in the related technologies that the packet processing time is long due to the TCAM-based table query manner and the packet forwarding performance is affected accordingly, a TCAM-based table query processing method and apparatus is provided in the embodiments of the present disclosure to at least solve the above-mentioned problem.

According to one embodiment of the present disclosure, a TCAM-based table query processing method is provided, including: executing a first query process for querying a TCAM entry; while the first query process is executed, executing a second query process for querying one or more entries other than the TCAM entry, wherein the first query process and the second query process run independently of each other; and respectively acquiring a first query result and a second query result through the first query process and the second query process, wherein executing the second query process for querying the one or more entries other than the TCAM entry comprises:executing the second query process after execution of the first query process is triggered according to a query message for querying the TCAM entry. In an example embodiment, acquiring the first query result through the first query process includes: storing the first query result, which is obtained by querying from a TCAM, into a designated register other than a dedicated table query engine register; reading the first query result from the designated register to the dedicated table query engine register; and acquiring the first query result from the dedicated table query engine register.

In an example embodiment, before reading the first query result from the designated register to the dedicated table query engine register, the method includes: judging whether the second query process ends or not, wherein in a case where it is judged that the second query process ends, reading the first query result from the designated register to the dedicated table query engine register.

In an example embodiment, judging whether the second query process ends or not includes: judging whether a traversal query for each entry to be queried in the one or more entries other than the TCAM entry has been completed or not.

In an example embodiment, acquiring the second query result through the second query process includes: storing the second query result, which is obtained by querying through the second query process, into a dedicated table query engine register; and acquiring the second query result from the dedicated table query engine register.

In an example embodiment, executing the second query process for querying one or more entries other than the TCAM entry includes: executing the second query process after execution of the first query process is triggered according to a query message for querying the TCAM entry.

According to another embodiment of the present disclosure, a TCAM-based table query processing apparatus is provided, including: a first executing module configured to execute a first query process for querying a TCAM entry; a second executing module configured to, while the first executing module executes the first query process, execute a second query process for querying one or more entries other than the TCAM entry, wherein the first query process and the second query process run independently of each other; and an acquisition module configured to respectively acquire a first query result and a second query result through the first query process and the second query process, wherein the second executing module is configured to execute the second query process after execution of the first query process is triggered according to a query message for querying the TCAM entry. In an example embodiment, the acquisition module includes: a first storage unit configured to store the first query result, which is obtained by querying from a TCAM, into a designated register other than a dedicated table query engine register; a reading unit configured to read the first query result from the designated register to the dedicated table query engine register; and a first acquisition unit configured to acquire the first query result from the dedicated table query engine register.

In an example embodiment, the acquisition module includes: a second storage unit configured to store the second query result, which is obtained by querying through the second query process, into a dedicated table query engine register; and a second acquisition unit configured to acquire the second query result from the dedicated table query engine register.

In an example embodiment, the second executing module is configured to execute the second query process after execution of the first query process is triggered according to a query message for querying the TCAM entry.

By virtue of the embodiments of the present disclosure, while executing a first query process for querying a TCAM entry, a second query process for querying one or more entries other than the TCAM entry is executed, thereby solving the technical problem in the related technologies that the packet processing time is long due to the TCAM-based table query manner and the packet forwarding performance is affected accordingly, shortening the packet processing time and improving the packet forwarding performance.

### BRIEF DESCRIPTION OF THE DRAWINGS

Drawings, provided for further understanding of the present disclosure and forming a part of the specification, are used to explain the present disclosure together with embodiments of the present disclosure rather than to limit the present disclosure. In the drawings:
Fig. 1 is a flowchart of a TCAM-based table query processing method according to related technologies;
Fig. 2 is a flowchart of a TCAM-based table query processing method according to an embodiment of the present disclosure;
Fig. 3 is a structural block diagram of a TCAM-based table query processing apparatus according to an embodiment of the present disclosure;
Fig. 4 is another structural block diagram of a TCAM-based table query processing apparatus according to an embodiment of the present disclosure;
Fig. 5 is a flowchart of a TCAM-based table query processing method according to an example embodiment of the present disclosure; and
Fig. 6 is a flowchart of a TCAM-based table query processing method according to another example embodiment of the present disclosure;

### DESCRIPTION OF EMBODIMENTS

The disclosure is described below in detail by reference to the accompanying drawings in conjunction with embodiments. It should be noted that the embodiments and the characteristics of the embodiments can be combined with each other if no conflict is caused.

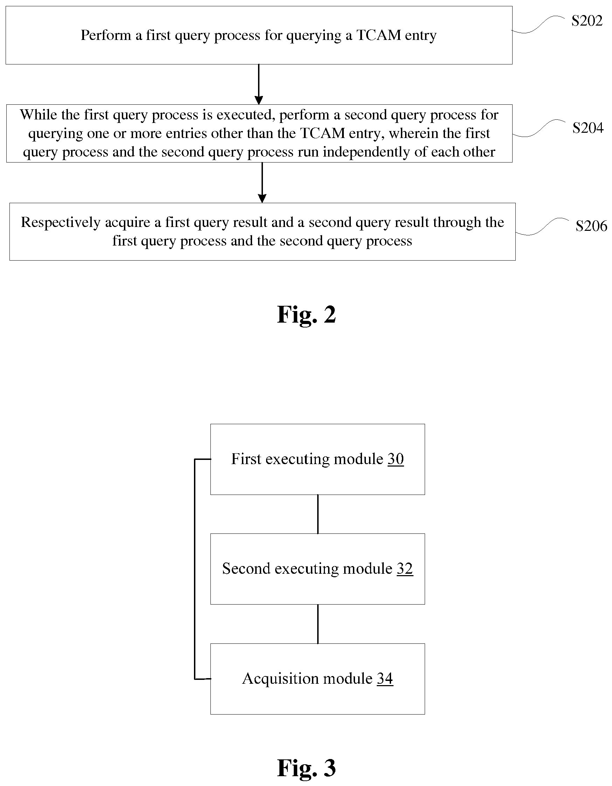

Fig. 2 is a flowchart of a TCAM-based table query processing method according to an embodiment of the present disclosure. As shown in Fig. 2, the method includes:
step S202, a first query process for querying a TCAM entry is executed;
step S204, while the first query process is executed, a second query process for querying one or more entries other than the TCAM entry is executed, wherein the first query process and the second query process run independently of each other; and
step S206, a first query result and a second query result are respectively acquired through the first query process and the second query process.

By means of various processing steps above, since the second query process for querying the one or more entries other than the TCAM entry is executed while the first query process for querying the TCAM entry is executed, waiting time for waiting for the query result in the above-mentioned first query process is fully used, thereby effectively shortening the packet processing time and improving the packet forwarding performance.

In the present embodiment, in order not to affect the normal TCAM-based table query, a designated register different from a dedicated table query engine register is provided for storing the returned query result during the process of acquiring the first query result according to the first query process, and the specific implementation is as follows: the first query result, which is obtained by querying from a TCAM, is stored into a designated register other than a dedicated table query engine register; the first query result is read from the designated register to the dedicated table query engine register; and the first query result is acquired from the dedicated table query engine register.

In the present embodiment, before the first query result is read from the designated register to the dedicated table query engine register, it is judged whether the second query process ends or not, wherein in a case where it is judged that the second query process ends, the first query result is read from the designated register to the dedicated table query engine register.

When there are a plurality of other entries mentioned above, the above-mentioned judgement process may be implemented in the following manner: it is judged whether a traversal query for each entry to be queried in the multiple entries other than the TCAM entry has been completed or not.

The above-mentioned second query process may be implemented in the following manner: the second query result, which is obtained by querying through the second query process, is stored into a dedicated table query engine register; and the second query result is acquired from the dedicated table query engine register.

The time for executing the second query process for querying the one or more entries other than the TCAM entry may be any time in the second query process and may be determined according to actual situations. In an example implementation of the embodiment of the present disclosure, the second query process may be executed after execution of the first query process is triggered according to a query message for querying the TCAM entry.

A TCAM-based table query processing apparatus is also provided in the present embodiment. The apparatus is used for realizing the above-mentioned embodiments and example implementation, which is already explained and will not be described any more, and the modules which are referred to in the apparatus are described below. The term "module" as used below may be a combination of the software and/or hardware which can realise a pre-determined function. Although the device described in the following embodiment may be implemented by software in some example embodiments, it would be conceived to implement hardware or a combination of software and hardware. Fig. 3 is a structural block diagram of a TCAM-based table query processing apparatus according to an embodiment of the present disclosure. As shown in Fig. 3, the apparatus includes:
a first executing module 30 coupled with a second executing module 32 and an acquisition module 34 and configured to execute a first query process for querying a TCAM entry;
the second executing module 32 coupled with the acquisition module 34 and configured to, while the first executing module executes the first query process, execute a second query process for querying one or more entries other than the TCAM entry, wherein the first query process and the second query process run independently of each other; and
the acquisition module 34 configured to respectively acquire a first query result and a second query result through the first query process and the second query process.

With the functions achieved by the above-mentioned various modules, waiting time for waiting for the query result in the above-mentioned first query process can be fully used, thereby effectively shortening the packet processing time and improving the packet forwarding performance.

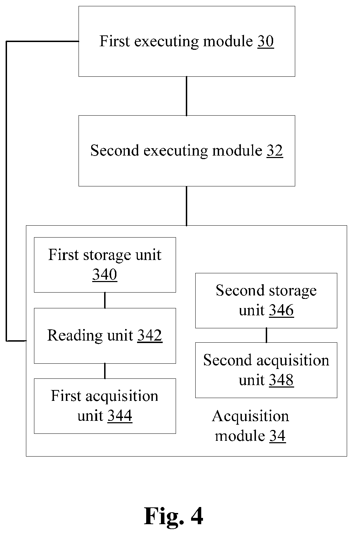

In an example embodiment, as shown in Fig. 4, the above-mentioned acquisition module 34 includes: a first storage unit 340 coupled with a reading unit 342 and configured to store the first query result, which is obtained by querying from a TCAM, into a designated register other than a dedicated table query engine register; the reading unit 342 coupled with a first acquisition unit 344 and configured to read the first query result from the designated register to the dedicated table query engine register; and the first acquisition unit 344 configured to acquire the first query result from the dedicated table query engine register.

In an example embodiment, as shown in Fig. 4, the above-mentioned acquisition module 34 includes: a second storage unit 346 coupled with a second acquisition unit 348 and configured to store the second query result, which is obtained by querying through the second query process, into a dedicated table query engine register; and the second acquisition unit 348 configured to acquire the second query result from the dedicated table query engine register.

In an example embodiment, the above-mentioned second executing module 32 is configured to execute the second query process after execution of the first query process is triggered according to a query message for querying the TCAM entry.

In order to better understand the embodiments above, detailed description will be made below in combination with example embodiments 1 and 2 of the disclosure.

### Embodiment 1

A TCAM-based table query processing method is provided in the present embodiment. During the process of waiting for the result of the TCAM-based table query, the query for one or more other entries is added, thereby shortening the packet processing time and improving the packet forwarding performance.

To achieve the above objective, the present embodiment adopts the following technical solution. The idle waiting time in the related technologies (the solution as shown in Fig. 1) is fully used to conduct the query for other entries (such as querying a hash table) needing to be queried, after the query is completed, it is judged again whether the TCAM-based table query is completed or not, if completed, a direct table is further queried, if not completed, wait for the completion of the TCAM-based table query.

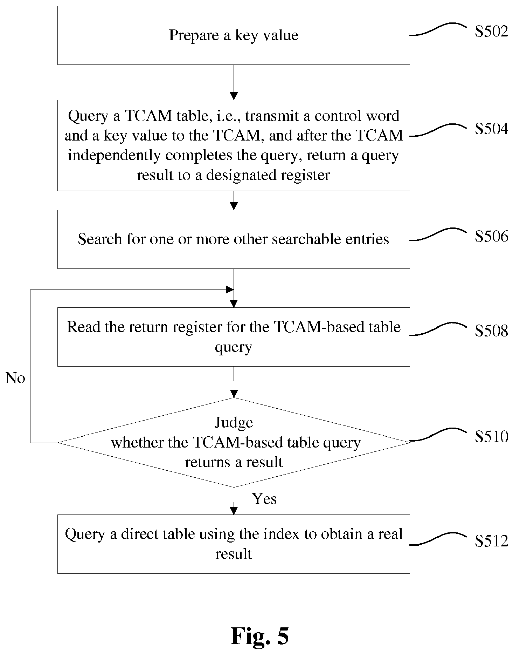

As shown in Fig. 5, the method includes steps S502 to S512 as follows.

Step S502: a table query key value for executing TCAM-based table query is prepared, and step S504 is executed after the preparation is completed.

Step S504: the TCAM table is queried using the prepared table query key value.

It is emphasized herein that TCAM-based table query is different from other ordinary table queries. The TCAM-based table query is a process in which a data processing chip transmits a control word and a key value to the TCAM, and the TCAM performs table query independently.

The data processing chip only needs to designate a return register (the return register does not occupy the dedicated table query engine register, and the dedicated table query engine register can read a TCAM returned value in the return register) to the TCAM-based table query, and then during the process of waiting for the result of the TCAM-based table query, the data processing chip can initiate the query of one or more other entries.

Therefore, in step S504, the data processing chip should designate that the result obtained after the ending of the TCAM-based table query is returned to a return register rather than a dedicated table query engine register.

After the execution of a TCAM-based table query command is completed (that is, the control word and the key value are transmitted to the TCAM), step 3 is executed.

Step S506: it is checked whether or not one or more entries needing to be queried in parallel exist, i.e., one or more entries irrelevant to the result of the TCAM-based table query. If these queries exist, they are queried during the process of waiting for the result of TCAM-based table query to return, i.e., parallel query is conducted, after the parallel query ends, step S508 is executed.

Step S508: the return register for the TCAM-based table query is read, and the result of the TCAM-based table query is read into the dedicated table query engine register; and step S510 is executed.

Step S510: it is judged whether the TCAM-based table query returns a result or not, if the result is returned, step S512 is executed; if the result is not returned, continue to perform step S510, i.e., a waiting process is conducted; in practical applications, it is only needed to wait for a very short time.

Step S512: a direct table is queried using the index in the returned result to obtain a desired result. The process ends.

The above-mentioned solution of the present embodiment is applicable to TCAM-based table query of various types.

### Embodiment 2

A simple example for packet processing is provided in the present embodiment. See table 1, four tables need to be queried, wherein table 1 is an independent entry which can be queried at any time, and table 2-table 4 should be queried sequentially, i.e., table 4 depends on table 3 and table 3 depends on table 2.

**Table 1**

| | | |
|---|---|---|
| Table 1 | Spanning tree table | Direct table, which is an independent entry |
| Table 2 | Routing table | Using TCAM-based table query |
| Table 3 | Direct routing table | Direct table, which uses an index returned by the TCAM-based table query as the key value for table query |
| Table 4 | Next hop table | Direct table, which uses the index of the next hop in a result of querying the direct routing table as the key value for table query |

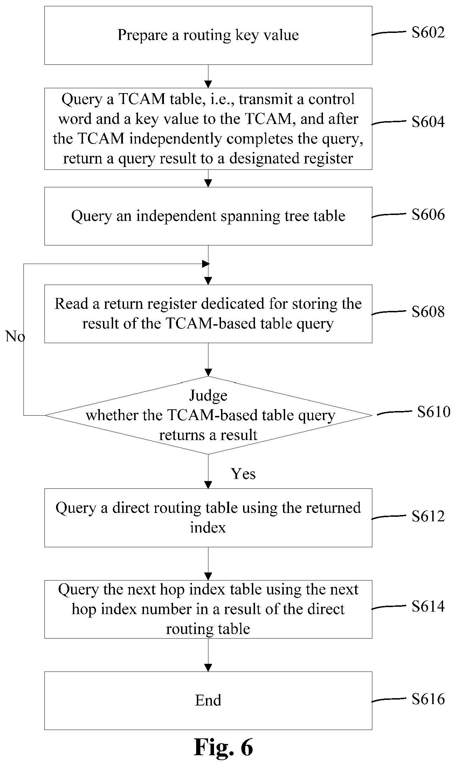

As shown in Fig. 6, the TCAM-based table query processing method provided in the present embodiment includes the following steps S602 to S616.

Step S602: a table query key value (IP address + dedicated private network number) for a routing table query is prepared, and step S604 is executed after the preparation is completed.

Step S604: the TCAM table is queried using the prepared table query key value for table query, and a result of the TCAM-based table query is returned to a return register, and step S606 is executed.

Step S606: parallel query is conducted to query the independent spanning tree table. After the spanning tree table query ends (i.e., a query result is returned), step S608 is executed.

Step S608: the return register for the TCAM-based table query is read, and the result of the TCAM-based table query is read into a dedicated table query engine register; and step S610 is executed.

Step S610: it is judged whether the TCAM-based table query returns a result or not, if the result is returned, step S612 is executed; and if the result is not returned, continue to perform step S610, i.e., a waiting process is conducted; in practical applications, it is only needed to wait for a very short time.

Step S612: a direct routing table is queried using the index in the returned result to obtain a desired result; and step S614 is executed.

Step S614: the next hop index table is queried using the next hop index number in a result of the direct routing table.

Step S616: the process ends.

In summary, the embodiments of the present disclosure have the advantages as follows: the query for one or more other entries is conducted during the process of waiting for the result of the TCAM-based table query, thereby shortening the packet processing time and improving the packet forwarding performance.

In another embodiment, software is also provided, and the software is used to execute the above-mentioned embodiments or the technical solution described in the example embodiment.

In another embodiment, a storage medium is also provided, wherein the storage medium stores the above-mentioned software, and the storage medium includes but is not limited to an optical disk, a soft disk, a hard disk, an erasable storage, etc.

Obviously, a person skilled in the art would understand that the above components and steps of the disclosure can be implemented by using general purpose calculating device, can be integrated in one calculating device or distributed on a network which consists of a plurality of calculating devices, and alternatively they can be implemented by using the executable program code of the calculating device, so that consequently they can be stored in the storing device and executed by the calculating device, in some cases, can perform the shown or described step in sequence other than herein, or they are made into integrated circuit component respectively, or a plurality of components or steps thereof are made into one integrated circuit component. In this way, the present disclosure is not restricted to any particular hardware and software combination.

The descriptions above are only the preferable embodiment of the present disclosure, which are not used to restrict the present disclosure, for those skilled in the art, the present disclosure may have various changes and variations. Any amendments, equivalent substitutions, improvements, etc. within the principle of the disclosure are all included in the scope of the protection defined by the appended claims of the disclosure.

### INDUSTRIAL APPLICABILITY

The above-mentioned technical solutions provided in the present disclosure may be applied to the ternary content addressable memory (TCAM)-based table query processing process, by using the technical means, a second query process for querying one or more entries other than the TCAM entry is executed while the first query process is executed, the technical problems in the related technologies that the packet processing time is long due to the TCAM-based table query manner and the packet forwarding performance is affected accordingly are solved, thereby shortening the packet processing time and improving the packet forwarding performance.

## Claims

1. A ternary content addressable memory TCAM-based table query processing method, comprising:
executing a first query process for querying a TCAM entry;
while the first query process is executed, executing a second query process for querying one or more entries other than the TCAM entry, wherein the first query process and the second query process run independently of each other; and
respectively acquiring a first query result and a second query result through the first query process and the second query process, wherein executing the second query process for querying the one or more entries other than the TCAM entry comprises:
executing the second query process after execution of the first query process is triggered according to a query message for querying the TCAM entry.

2. The method as claimed in claim 1, wherein acquiring the first query result through the first query process comprises:
storing the first query result, which is obtained by querying from a TCAM, into a designated register other than a dedicated table query engine register;
reading the first query result from the designated register to the dedicated table query engine register; and
acquiring the first query result from the dedicated table query engine register.

3. The method as claimed in claim 2, wherein before reading the first query result from the designated register to the dedicated table query engine register, the method comprises:
judging whether the second query process ends or not, wherein in a case where it is judged that the second query process ends, reading the first query result from the designated register to the dedicated table query engine register.

4. The method as claimed in claim 3, wherein judging whether the second query process ends or not comprises:
judging whether a traversal query for each entry to be queried in the one or more entries other than the TCAM entry has been completed or not.

5. The method as claimed in claim 1, wherein acquiring the second query result through the second query process comprises:
storing the second query result, which is obtained by querying through the second query process, into a dedicated table query engine register; and
acquiring the second query result from the dedicated table query engine register.

6. A ternary content addressable memory TCAM-based table query processing apparatus, comprising:
a first executing module (30) configured to execute a first query process for querying a TCAM entry;
a second executing module (32) configured to, while the first executing module executes the first query process, execute a second query process for querying one or more entries other than the TCAM entry, wherein the first query process and the second query process run independently of each other; and
an acquisition module (34) configured to respectively acquire a first query result and a second query result through the first query process and the second query process, wherein the second executing module (32) is configured to execute the second query process after execution of the first query process is triggered according to a query message for querying the TCAM entry.

7. The apparatus as claimed in claim 6, wherein the acquisition module comprises:
a first storage unit (340) configured to store the first query result, which is obtained by querying from a TCAM, into a designated register other than a dedicated table query engine register;
a reading unit (342) configured to read the first query result from the designated register to the dedicated table query engine register; and
a first acquisition unit (344) configured to acquire the first query result from the dedicated table query engine register.

8. The apparatus as claimed in claim 6, wherein the acquisition module comprises:
a second storage unit (346) configured to store the second query result, which is obtained by querying through the second query process, into a dedicated table query engine register; and
a second acquisition unit (348) configured to acquire the second query result from the dedicated table query engine register.

## Patentansprüche

1. TCAM (Ternary Content Addressable Memory - ternärer inhaltsadressierbarer Speicher) - basiertes Tabellenabfrageverfahren, wobei das Verfahren umfasst:
Ausführen eines ersten Abfragevorgangs zum Abfragen eines TCAM-Eintrags;
während der erste Abfragevorgang ausgeführt wird, Ausführen eines zweiten Abfragevorgangs zur Abfrage eines oder mehrerer Einträge, bei denen es sich nicht um TCAM-Einträge handelt, wobei der erste Abfragevorgang und der zweite Abfragevorgang unabhängig voneinander laufen; und
Erhalten jeweils eines ersten Abfrageergebnisses und eines zweiten Abfrageergebnisses durch den ersten Abfragevorgang und den zweiten Abfragevorgang, wobei der zweite Abfragevorgang zur Abfrage des einen oder der mehreren Einträge, bei denen es sich nicht um TCAM-Einträge handelt, umfasst:
Ausführen des zweiten Abfragevorgangs, nachdem die Ausführung des ersten Abfragevorgangs ausgelöst worden ist gemäß einer Abfragemitteilung zur Abfrage des TCAM-Eintrags.

2. Verfahren gemäß Anspruch 1, wobei das Erhalten des ersten Abfrageergebnisses durch den ersten Abfragevorgang umfasst:
Speichern des ersten Abfrageergebnisses, welches erhalten wird durch Abfrage aus einem TCAM in ein festgelegtes Verzeichnis, bei dem es sich nicht um ein spezielles Tabellenabfragenmaschinenverzeichnis handelt;
Einlesen des ersten Abfrageergebnisses aus dem festgelegten Verzeichnis in das Tabellenabfragenmaschinenverzeichnis; und
Erhalten des ersten Abfrageergebnisses aus dem Tabellenabfragenmaschinenverzeichnis.

3. Verfahren gemäß Anspruch 2, wobei vor dem Einlesen des ersten Abfrageergebnisses aus dem festgelegten Verzeichnis in das spezielle Tabellenabfragenmaschinenverzeichnis das Verfahren umfasst:
Beurteilen, ob der zweite Abfragevorgang endet oder nicht, wobei in dem Fall, dass geurteilt wird, dass der zweite Abfragevorgang endet, das erste Abfrageergebnis aus dem festgelegten Verzeichnis in das spezielle Tabellenabfragenmaschinenverzeichnis eingelesen wird.

4. Verfahren gemäß Anspruch 3, wobei das Beurteilen, ob der zweite Abfragevorgang endet oder nicht, umfasst:
Beurteilen, ob eine Queranfrage für jeden abzufragenden Eintrag in dem einen oder den mehreren Einträgen, bei denen es sich nicht um TCAM-Einträge handelt, vollendet worden ist oder nicht.

5. Verfahren gemäß Anspruch 1, wobei das Erhalten des zweiten Abfrageergebnisses durch den zweiten Abfragevorgang umfasst:
Speichern des zweiten Abfrageergebnisses, welches erhalten wird durch Abfrage durch den zweiten Abfragevorgang, in ein spezielles Tabellenabfragenmaschinenverzeichnis; und
Erhalten des zweiten Abfrageergebnisses aus dem speziellen Tabellenabfragenmaschinenverzeichnis.

6. TCAM (Ternary Content Addressable Memory - ternärer inhaltsadressierbarer Speicher) - basierte Tabellenabfragevorrichtung, wobei die Vorrichtung umfasst:
ein erstes Ausführungsmodul (30), das konfiguriert ist zum Ausführen eines ersten Abfragevorgangs zum Abfragen eines TCAM-Eintrags;
ein zweites Ausführungsmodul (32), das konfiguriert ist, während der erste Abfragevorgang ausgeführt wird, zum Ausführen eines zweiten Abfragevorgangs zur Abfrage eines oder mehrerer Einträge, bei denen es sich nicht um TCAM-Einträge handelt, wobei der erste Abfragevorgang und der zweite Abfragevorgang unabhängig voneinander laufen; und
ein Erhaltungsmodul (34), das konfiguriert ist zum Erhalten jeweils eines ersten Abfrageergebnisses und eines zweiten Abfrageergebnisses durch den ersten Abfragevorgang und den zweiten Abfragevorgang, wobei das zweite Ausführungsmodul (32) konfiguriert ist zum Ausführen des zweiten Abfragevorgangs, nachdem die Ausführung des ersten Abfragevorgangs ausgelöst worden ist gemäß einer Abfragemitteilung zur Abfrage des TCAM-Eintrags.

7. Vorrichtung gemäß Anspruch 6, wobei das Erhaltungsmodul umfasst:
eine erste Speichereinheit (340), die konfiguriert ist zum Speichern eines ersten Abfrageergebnisses, welches erhalten wird durch Abfrage aus einem TCAM in ein festgelegtes Verzeichnis, bei dem es sich nicht um ein spezielle Tabellenabfragenmaschinenverzeichnis handelt;
eine Einleseeinheit (342), die konfiguriert ist zum Einlesen des ersten Abfrageergebnisses aus dem festgelegten Verzeichnis in das spezielle Tabellenabfragenmaschinenverzeichnis; und
eine erste Erhaltungseinheit (344), die konfiguriert ist zum Erhalten des ersten Abfrageergebnisses aus dem speziellen Tabellenabfragenmaschinenverzeichnis.

8. Vorrichtung gemäß Anspruch 6, wobei das Erhaltungsmodul umfasst:
eine zweite Speichereinheit (346), die konfiguriert ist zum Speichern des zweiten Abfrageergebnisses, welches erhalten wird durch Abfrage durch den zweiten Abfragevorgang, in ein spezielle Tabellenabfragenmaschinenverzeichnis; und
eine zweite Erhaltungseinheit (348), die konfiguriert ist zum Erhalten des zweiten Abfrageergebnisses aus dem speziellen Tabellenabfragenmaschinenverzeichnis.

## Revendications

1. Procédé de traitement d'interrogation de table à base de mémoire adressable par contenu ternaire, TCAM, comprenant :
l'exécution d'un premier processus d'interrogation pour interroger une entrée de TCAM ;
alors que le premier processus d'interrogation est exécuté, l'exécution d'un deuxième processus d'interrogation pour interroger une ou plusieurs entrées autres que l'entrée de TCAM, dans lequel le premier processus d'interrogation et le deuxième processus d'interrogation sont exécutés indépendamment l'un de l'autre ; et
l'acquisition respective d'un premier résultat d'interrogation et d'un deuxième résultat d'interrogation par le biais du premier processus d'interrogation et du deuxième processus d'interrogation, dans lequel l'exécution du deuxième processus d'interrogation pour interroger les une ou plusieurs entrées autres que l'entrée de TCAM comprend :
l'exécution du deuxième processus d'interrogation après que l'exécution du premier processus d'interrogation est déclenchée selon un message d'interrogation pour interroger l'entrée de TCAM.

2. Procédé selon la revendication 1, dans lequel l'acquisition du premier résultat d'interrogation par le biais du premier processus d'interrogation comprend :
le stockage du premier résultat d'interrogation, qui est obtenu par interrogation à partir d'une TCAM, dans un registre désigné autre qu'un registre de moteur d'interrogation de table dédié ;
la lecture du premier résultat d'interrogation du registre désigné au registre de moteur d'interrogation de table dédié ; et
l'acquisition du premier résultat d'interrogation à partir du registre de moteur d'interrogation de table dédié.

3. Procédé selon la revendication 2, dans lequel, avant la lecture du premier résultat d'interrogation du registre désigné au registre de moteur d'interrogation de table dédié, le procédé comprend :
le jugement du fait que le deuxième processus d'interrogation se termine ou non, dans lequel, dans un cas où il est jugé que le deuxième processus d'interrogation se termine, la lecture du premier résultat d'interrogation du registre désigné au registre de moteur d'interrogation de table dédié.

4. Procédé selon la revendication 3, dans lequel le jugement du fait que le deuxième processus d'interrogation se termine ou non comprend :
le jugement du fait qu'une interrogation transversale pour chaque entrée à interroger dans les une ou plusieurs entrées autres que l'entrée TCAM a ou non été achevée.

5. Procédé selon la revendication 1, dans lequel l'acquisition du deuxième résultat d'interrogation par le biais du deuxième processus d'interrogation comprend :
le stockage du deuxième résultat d'interrogation, qui est obtenu en interrogeant par le biais du deuxième processus d'interrogation, dans un registre de moteur d'interrogation de table dédié ; et
l'acquisition du deuxième résultat d'interrogation à partir du registre de moteur d'interrogation de table dédié.

6. Appareil de traitement d'interrogation de table à base de mémoire adressable par contenu ternaire, TCAM, comprenant :
un premier module d'exécution (30) configuré pour exécuter un premier processus d'interrogation pour interroger une entrée de TCAM ;
un deuxième module d'exécution (32) configuré pour, alors que le premier module d'exécution exécute le premier processus d'interrogation, exécuter un deuxième processus d'interrogation pour interroger une ou plusieurs entrées autres que l'entrée de TCAM, dans lequel le premier processus d'interrogation et le deuxième processus d'interrogation sont exécutés indépendamment l'un de l'autre ; et
un module d'acquisition (34) configuré pour acquérir respectivement un premier résultat d'interrogation et un deuxième résultat d'interrogation par le biais du premier processus d'interrogation et du deuxième processus d'interrogation, dans lequel le deuxième module d'exécution (32) est configuré pour exécuter le deuxième processus d'interrogation après que l'exécution du premier processus d'interrogation est déclenchée selon un message d'interrogation pour interroger l'entrée de TCAM.

7. Appareil selon la revendication 6, dans lequel le module d'acquisition comprend :
une première unité de stockage (340) configurée pour stocker le premier résultat d'interrogation, qui est obtenu par interrogation à partir d'une TCAM, dans un registre désigné autre qu'un registre de moteur d'interrogation de table dédié ;
une unité de lecture (342) configurée pour lire le premier résultat d'interrogation du registre désigné au registre de moteur d'interrogation de table dédié ; et
une première unité d'acquisition (344) configurée pour acquérir le premier résultat d'interrogation à partir du registre de moteur d'interrogation de table dédié.

8. Appareil selon la revendication 6, dans lequel le module d'acquisition comprend :
une deuxième unité de stockage (346) configurée pour stocker le deuxième résultat d'interrogation, qui est obtenu en interrogeant par le biais du deuxième processus d'interrogation, dans un registre de moteur d'interrogation de table dédié ; et
une deuxième unité d'acquisition (348) configurée pour acquérir le deuxième résultat d'interrogation à partir du registre de moteur d'interrogation de table dédié.
